# EUROPEAN PATENT APPLICATION

(11) **EP 2 219 142 A1**
(43) Date of publication of application: **18.08.2010**
(21) Application number: 09153754.8
(22) Date of filing: 26.02.2009
(51) Int. Cl.: G06Q 10/00, H04M 1/725

(54) **Method of altering a user interface**

(30) Priority: 13.02.2009 US 152473 P
(71) Applicant: RESEARCH IN MOTION LIMITED, Waterloo, Ontario N2L 3W8 (CA)
(72) Inventor: Logan, Adrian, Waterloo Ontario N2L 5Z5 (CA); Jain, Rohit, Waterloo Ontario N2L 5Z5 (CA); Fritzley, Eric, Waterloo Ontario N2L 5Z5 (CA)
(74) Representative: MERH-IP Matias Erny Reichl Hoffmann

(57) **Abstract**

In a computer-implemented method of altering an interface, an interface associated with an application having time-dependent events is displayed. The interface displays at least one activatable component. At a pre-set time relative to a time for one of said time-dependent events, the interface is altered to add an added activatable component, or to set a pre-determined one of the activatable components of the interface as a selected component.

## Description

### CROSS-REFERENCE TO RELATED APPLICATIONS

This application claims priority from U.S. provisional application no. 61/152,473, filed February 13, 2009, the contents of which are incorporated herein by reference. This application is related to U.S. provisional application no. 61/152,450, filed February 13, 2009, the contents of which are incorporated herein by reference.

### BACKGROUND

The present application relates generally to a computer-implemented method of altering a user interface and, in one aspect, relates to a method of establishing a user interface relating to a conference call event.

It is common for people to engage in collaborative work. Increasingly, collaboration occurs among people who are geographically separated from one another. When collaborators desire to meet, they may all physically converge in one location for a meeting. Alternatively, and as is more typical nowadays, collaborators may remain at their respective geographic locations but instead meet via conference call.

The ability to meet via conference call has been made possible by the provision of conference call systems by telephony service providers. A subscriber to such a conference call system may, in exchange for payment of a subscription fee, host conference calls. In particular, the service provider may provide the host subscriber a telephone number. The host, who is sometimes also referred to as the "moderator", may then give that phone number, i.e. the "dial-in number", to desired participants in the conference call. Each participant, including the host, may call the dial-in number at the designated meeting time, i.e. each participant may "dial-in" to the conference call. The conference call system may then "bridge" or link the callers' phone lines together, joining all participants into the conference.

Alternatively, instead of subscribing to a conference call system maintained by a third party telephony service provider, certain organizations may have their own conference call system. These private conference call systems may function similarly.

In addition to the dial-in phone number, conference call systems often include the capability for the host to set a security code. The host may give the security code, for example for a given conference call event, to each desired participant in the conference in addition to the dial-in number. Subsequent to dialing the dial-in number and being connected to the conference call system, each participant may be prompted to enter the security code. Only after entering the correct security code will a participant be placed into the conference. While the security code is optional, many people/organizations choose to use one since dial-in numbers may be distributed widely and may therefore become widely known. Requiring that a security code be entered helps ensure that only those people with the code can successfully join the conference.

A participant desiring to join a conference call must therefore dial first a multi-digit telephone number followed by a multi-digit security code. This requirement presents at least two difficulties. First, since the participant is unlikely to remember the required sequence of digits, he or she needs to record them upon receipt, for example, from the host, such that he or she is able to later retrieve those digits at the designated meeting time. Secondly, even after retrieving the digits, the user must typically subsequently enter them into the telephone in order to be successfully connected and placed into the conference call. Given the many digits that the user must enter, the user is prone to mis-dialing the dial-in number and incorrectly entering the security code.

There therefore exists a need to more easily enable a user to join a conference call.

### GENERAL

In one aspect, a computer-implemented method of altering an interface may be provided in which an interface associated with an application having time-dependent events is displayed. The interface may display at least one activatable component. At a pre-set time relative to a time for one of said time-dependent events, the interface may be altered to add an added activatable component, or to set a pre-determined one of the activatable components of the interface as a selected component.

In another aspect, a computer-implemented method of altering an interface may comprise displaying an interface of an application having time-dependent events. The interface may display at least one selectable component and at a pre-set time relative to a time for one of the time-dependent events, the interface is altered to add an added selectable component to the interface.

In yet another aspect, a computer-implemented method of altering an interface may display an interface of an application having time-dependent events. The interface may display at least one selectable component. At a pre-set time relative to a time for one of the time-dependent events, the interface may be altered to pre-select one of the selectable components of the interface.

Mobile communications devices adapted to implement the methods may also be provided.

Other aspects of the present application will be apparent to those of ordinary skill in the art from a review of the following detailed description in conjunction with the drawings.

Embodiments of the present application are not limited to any particular operating system, mobile device architecture, server architecture, or computer programming language.

Although reference may be made to "calls" in the description of example embodiments below, it will be appreciated that the described systems and methods are applicable to session-based communications in general and not limited to voice calls. It will also be appreciated that the systems and methods may not be limited to sessions and may be applicable to messaging-based communications in some embodiments.

### BRIEF DESCRIPTION OF THE DRAWINGS

Reference will now be made, by way of example, to the accompanying drawings which show example embodiments of the present application, and in which:

**FIG. 1** shows, in block diagram form, an example system for managing enterprise-related mobile calls, including an enterprise communications platform;

**FIG. 2** shows, in block diagram form, further details of an embodiment of the enterprise communications platform;

**FIG. 3** shows another embodiment of the enterprise communications platform;

**FIG. 4** shows yet another embodiment of the enterprise communications platform;

**FIG. 5** shows further details of the enterprise communications platform of **FIG. 3****;**

**FIG. 6A** is a signaling diagram generally indicating how mobile-originated, mobile-initiated calls are processed by the network of **FIG. 5****;**

**FIG. 6B** is a signaling diagram generally indicating how mobile-originated, PBX-initiated, calls are processed by the network of **FIG. 5****;**

**FIG. 7A** is a signaling diagram generally indicating how mobile-terminated, mobile-initiated calls are processed by the network of **FIG. 5****;**

**FIG. 7B** is a signaling diagram generally indicating how mobile-terminated, PBX-initiated calls are processed by the network of **FIG. 5****;**

**FIG. 8** is a schematic diagram showing selected components of a mobile communications device implementing the disclosed method;

**FIGS. 9A** to 9F are screenshots depicting an operation of the mobile communications device of **FIG. 8****;**

**FIG. 10** is a screenshot depicting yet another operation of the mobile communications device of **FIG. 8****;**

**FIG. 11** is a screenshot depicting an aspect of operation of the disclosed method;

**FIG. 12** is a screenshot depicting yet another operation of the mobile communications device of **FIG. 8****;**

**FIG. 13** is a flow diagram depicting operation by a user of the mobile communications device of **FIG. 8** in accordance with the disclosed method;

**FIGS. 14A** and **14B** are screenshots depicting an aspect of the operation of a second embodiment of the disclosed method;

**FIG. 15** is a screenshot depicting an aspect of the operation of a third embodiment of the disclosed method;

**FIG. 16A** and **16B** are screenshots depicting an aspect of the operation of a fourth embodiment of the disclosed method; and

**FIG. 17A, 17B****,** and **17C** are screenshots depicting an aspect of the operation of a fifth embodiment of the disclosed method.

Similar reference numerals may have been used in different figures to denote similar components.

### DESCRIPTION OF PREFERRED EMBODIMENTS

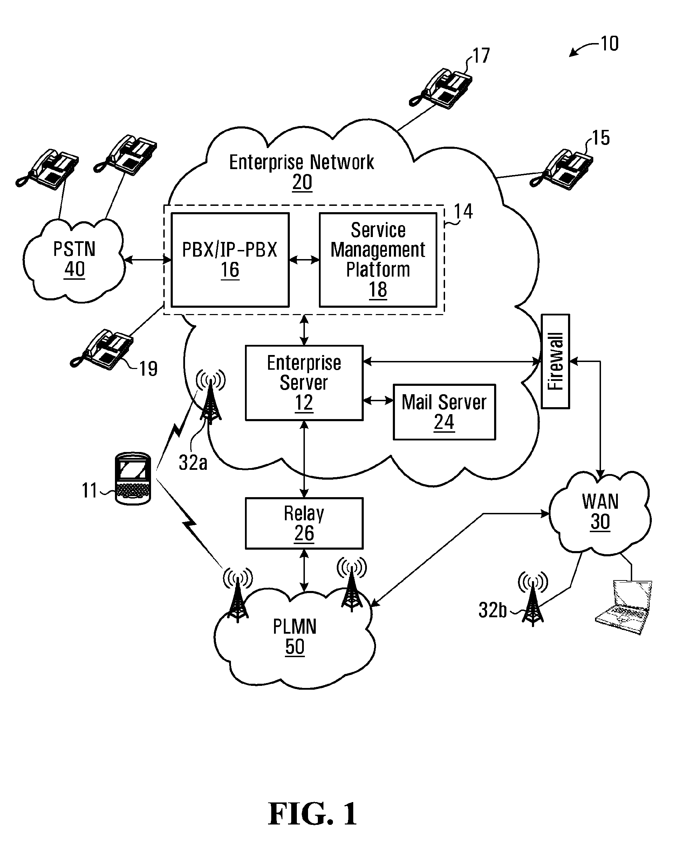

Reference is now made to **FIG. 1****,** which shows, in block diagram form, an example system, generally designated **10,** for the control and management of communications. The system **10** includes an enterprise or business system **20,** which in many embodiments includes a local area network (LAN). In the description below, the enterprise or business system **20** may be referred to as an enterprise network **20.** It will be appreciated that the enterprise network **20** may include more than one network and may be located in multiple geographic areas in some embodiments.

The enterprise network **20** may be connected, often through a firewall **22,** to a wide area network (WAN) **30,** such as the Internet. The enterprise network **20** may also be connected to a public switched telephone network (PSTN) **40** via direct inward dialing (DID) trunks or primary rate interface (PRI) trunks.

The enterprise network **20** may also communicate with a public land mobile network (PLMN) **50,** which may also be referred to as a wireless wide area network (WWAN) or, in some cases, a cellular network. The connection with the PLMN **50** may be made via a relay **26,** as known in the art.

The enterprise network **20** may also provide a wireless local area network (WLAN) **32**a featuring wireless access points. Other WLANs **32** may exist outside the enterprise network **20.** For example, WLAN **32**b may be connected to WAN **30.**

The system **10** may include a number of enterprise-associated mobile devices **11** (only one shown). The mobile devices **11** may include devices equipped for cellular communication through the PLMN **50,** mobile devices equipped for Wi-Fi communications over one of the WLANs **32,** or dual-mode devices capable of both cellular and WLAN communications. WLANs **32** may be configured in accordance with one of the IEEE 802.11 specifications.

It will be understood that the mobile devices **11** include one or more radio transceivers and associated processing hardware and software to enable wireless communications with the PLMN **50** and/or one of the WLANs **32.** In various embodiments, the PLMN **50** and mobile devices **11** may be configured to operate in compliance with any one or more of a number of wireless protocols, including GSM, GPRS, CDMA, EDGE, UMTS, EvDO, HSPA, 3GPP, or a variety of others. It will be appreciated that the mobile device **11** may roam within the PLMN **50** and across PLMNs, in known manner, as the user moves. In some instances, the dual-mode mobile devices **11** and/or the enterprise network **20** are configured to facilitate roaming between the PLMN **50** and a WLAN **32,** and are thus capable of seamlessly transferring sessions (such as voice calls) from a connection with the cellular interface of the dual-mode device **11** to the WLAN **32** interface of the dual-mode device **11,** and vice versa.

The enterprise network **20** typically includes a number of networked servers, computers, and other devices. For example, the enterprise network **20** may connect one or more desktop or laptop computers **15** (one shown). The connection may be wired or wireless in some embodiments. The enterprise network **20** may also connect to one or more digital telephone sets **17** (one shown).

The enterprise network **20** may include one or more mail servers, such as mail server **24,** for coordinating the transmission, storage, and receipt of electronic messages for client devices operating within the enterprise network **20.** Typical mail servers include the Microsoft Exchange Server^{™} and the IBM Lotus Domino^{™} server. Each user within the enterprise typically has at least one user account within the enterprise network **20.** Associated with each user account is message address information, such as an e-mail address. Messages addressed to a user message address are stored on the enterprise network **20** in the mail server **24.** The messages may be retrieved by the user using a messaging application, such as an e-mail client application. The messaging application may be operating on a user's computer **15** connected to the enterprise network **20** within the enterprise. In some embodiments, the user may be permitted to access stored messages using a remote computer, for example at another location via the WAN **30** using a VPN connection. Using the messaging application, the user may also compose and send messages addressed to others, within or outside the enterprise network **20.** The messaging application causes the mail server **24** to send a composed message to the addressee, often via the WAN **30.**

The relay **26** serves to route messages received over the PLMN **50** from the mobile device **11** to the corresponding enterprise network **20.** The relay **26** also pushes messages from the enterprise network **20** to the mobile device **11** via the PLMN **50.**

The enterprise network **20** also includes an enterprise server **12.** Together with the relay **26,** the enterprise server **12** functions to redirect or relay incoming e-mail messages addressed to a user's e-mail address within the enterprise network **20** to the user's mobile device **11** and to relay incoming e-mail messages composed and sent via the mobile device **11** out to the intended recipients within the WAN **30** or elsewhere. The enterprise server **12** and relay **26** together facilitate "push" e-mail service for the mobile device **11** enabling the user to send and receive e-mail messages using the mobile device **11** as though the user were connected to an e-mail client within the enterprise network **20** using the user's enterprise-related e-mail address, for example on computer **15.**

As is typical in many enterprises, the enterprise network **20** includes a Private Branch exchange (although in various embodiments the PBX may be a standard PBX or an IP-PBX, for simplicity the description below uses the term PBX to refer to both) **16** having a connection with the PSTN **40** for routing incoming and outgoing voice calls for the enterprise. The PBX **16** is connected to the PSTN **40** via DID trunks or PRI trunks, for example. The PBX **16** may use ISDN signaling protocols for setting up and tearing down circuit-switched connections through the PSTN **40** and related signaling and communications. In some embodiments, the PBX **16** may be connected to one or more conventional analog telephones **19.** The PBX **16** is also connected to the enterprise network **20** and, through it, to telephone terminal devices, such as digital telephone sets **17,** softphones operating on computers **15,** etc. Within the enterprise, each individual may have an associated extension number, sometimes referred to as a PNP (private numbering plan), or direct dial phone number. Calls outgoing from the PBX **16** to the PSTN **40** or incoming from the PSTN **40** to the PBX **16** are typically circuit-switched calls. Within the enterprise, *e*.*g*. between the PBX **16** and terminal devices, voice calls are often packet-switched calls, for example Voice-over-IP (VoIP) calls. However, the PBX may also facilitate packet-switched calls carried out with terminal devices outside the enterprise.

The enterprise network **20** may further include a Service Management Platform (SMP) **18** for performing some aspects of messaging or session control, like call control and advanced call processing features. The SMP **18** may, in some cases, also perform some media handling. Collectively the SMP **18** and PBX **16** may be referred to as the enterprise communications platform, generally designated **14.** It will be appreciated that the enterprise communications platform **14** and, in particular, the SMP **18,** is implemented on one or more servers having suitable communications interfaces for connecting to and communicating with the PBX **16** and/or DID/PRI trunks. Although the SMP **18** may be implemented on a stand-alone server, it will be appreciated that it may be implemented into an existing control agent/server as a logical software component. As will be described below, the SMP **18** may be implemented as a multi-layer platform.

The enterprise communications platform **14** implements the switching to connect session legs and may provide the conversion between, for example, a circuit-switched call and a VoIP call, or to connect legs of other media sessions. In some embodiments, in the context of voice calls the enterprise communications platform **14** provides a number of additional functions including automated attendant, interactive voice response, call forwarding, voice mail, etc. It may also implement certain usage restrictions on enterprise users, such as blocking international calls or 1-900 calls. In many embodiments, Session Initiation Protocol (SIP) may be used to set-up, manage, and terminate media sessions for voice calls. Other protocols may also be employed by the enterprise communications platform **14,** for example, Web Services, Computer Telephony Integration (CTI) protocol, Session Initiation Protocol for Instant Messaging and Presence Leveraging Extensions (SIMPLE), and various custom Application Programming Interfaces (APIs), as will be described in greater detail below.

One of the functions of the enterprise communications platform **14** is to extend the features of enterprise telephony to the mobile devices **11.** For example, the enterprise communications platform **14** may allow the mobile device **11** to perform functions akin to those normally available on a standard office telephone, such as the digital telephone set **17** or analog telephone set **15.** Example features may include direct extension dialing, enterprise voice mail, conferencing, call transfer, call park, etc.

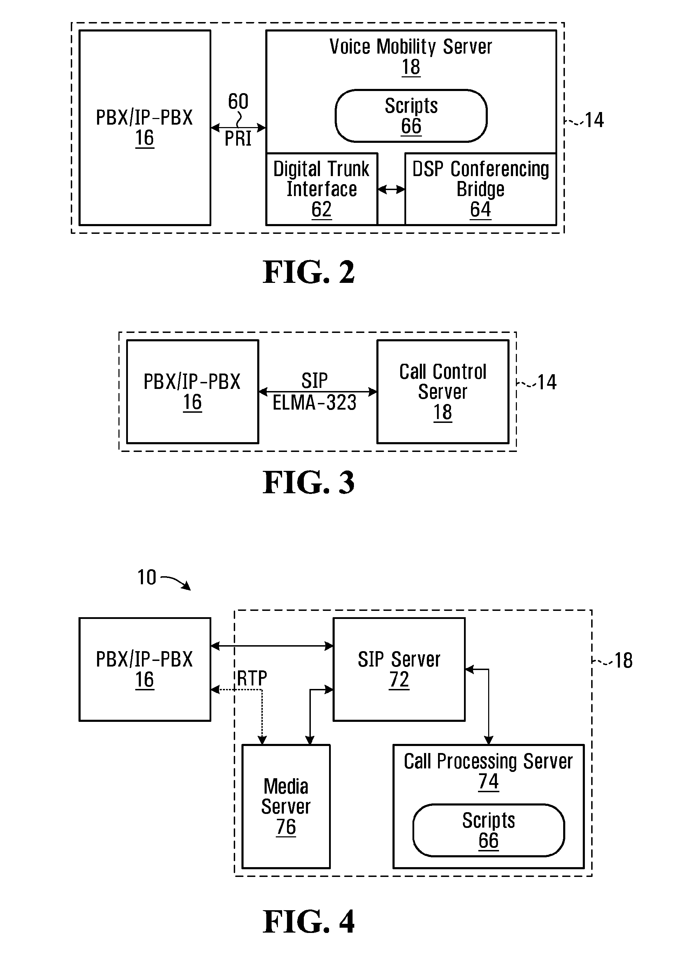

Reference is now made to **FIGS. 2** to **4****,** which show example embodiments of the enterprise communications system **14.** Again, although references are made below to "calls" or call-centric features it will be appreciated that the architectures and systems depicted and described are applicable to session-based communications in general and, in some instances, to messaging-based communications.

**FIG. 2** illustrates an embodiment intended for use in a circuit-switched TDM context. The PBX **16** is coupled to the SMP **18** via PRI connection **60** or other suitable digital trunk. In some embodiments, the PRI connection **60** may include a first PRI connection, a second PRI connection, and a channel service unit (CSU), wherein the CSU is a mechanism for connecting computing devices to digital mediums in a manner that allows for the retiming and regeneration of incoming signals. It will be appreciated that there may be additional or alternative connections between the PBX **16** and the SMP **18.**

In this embodiment, the SMP **18** assumes control over both call processing and the media itself. This architecture may be referred to as "First Party Call Control". Many of the media handling functions normally implemented by the PBX **16** are handled by the SMP **18** in this architecture. Incoming calls addressed to any extension or direct dial number within the enterprise, for example, are always first routed to the SMP **18.** Thereafter, a call leg is established from the SMP **18** to the called party within the enterprise, and the two legs are bridged. Accordingly, the SMP **18** includes a digital trunk interface **62** and a digital signal processing (DSP) conferencing bridge **64.** The DSP conferencing bridge **64** performs the bridging of calls for implementation of various call features, such as conferencing, call transfer, etc. The digital trunk interface **62** may be implemented as a plurality of telephonic cards, e.g. Intel Dialogic cards, interconnected by a bus and operating under the control of a processor. The digital trunk interface **62** may also be partly implemented using a processor module such as, for example, a Host Media Processing (HMP) processor.

The SMP **18** may include various scripts **66** for managing call processing. The scripts **66** are implemented as software modules, routines, functions, etc., stored in non-volatile memory and executed by the processor of the SMP **18.** The scripts **66** may implement call flow logic, business logic, user preferences, call service processes, and various feature applications.

**FIG. 3** shows another embodiment in which the PBX **16** performs the functions of terminating and/or bridging media streams, but call control functions are largely handled by the SMP **18.** In this embodiment, the SMP **18** may be referred to as a call control server **18.** This architecture may be referred to as "Third-Party Call Control".

The call control server **18** is coupled to the PBX **16,** for example through the LAN, enabling packet-based communications and, more specifically, IP-based communications. In one embodiment, communications between the PBX **16** and the call control server **18** are carried out in accordance with SIP. In other words, the call control server **18** uses SIP-based communications to manage the set up, tear down, and control of media handled by the PBX **16.** In one example embodiment, the call control server **18** may employ a communications protocol conforming to the ECMA-269 or ECMA-323 standards for Computer Supported Telecommunications Applications (CSTA).

**FIG. 4** shows yet another embodiment of the enterprise communications system **14.** This embodiment reflects the adaptation of an existing set of call processing scripts to an architecture that relies on third-party call control, with separate call control and media handling. The SMP **18** includes a call processing server **74.** The call processing server **74** includes the scripts or other programming constructs for performing call handling functions. The SMP **18** also includes a SIP server **72** and a media server **76.** The separate SIP server **72** and media server **76** logically separate the call control from media handling. The SIP server **72** interacts with the call processing server **74** using a computer-implemented communications handling protocol, such as one of the ECMA-269 or ECMA-323 standards. These standards prescribe XML based messaging for implementing Computer Supported Telecommunications Applications (CSTA).

The SIP server **72** interacts with the media server **76** using SIP-based media handling commands. For example, the SIP server **72** and media server **76** may communicate using Media Server Markup Language (MSML) as defined in IETF document Saleem A., "Media Server Markup Language", Internet Draft, draft-saleem-msml-07, August 7, 2008. The media server **76** may be configured to perform Host Media Processing (HMP).

Other architectures or configurations for the enterprise communications system **14** will be appreciated by those ordinarily skilled in the art.

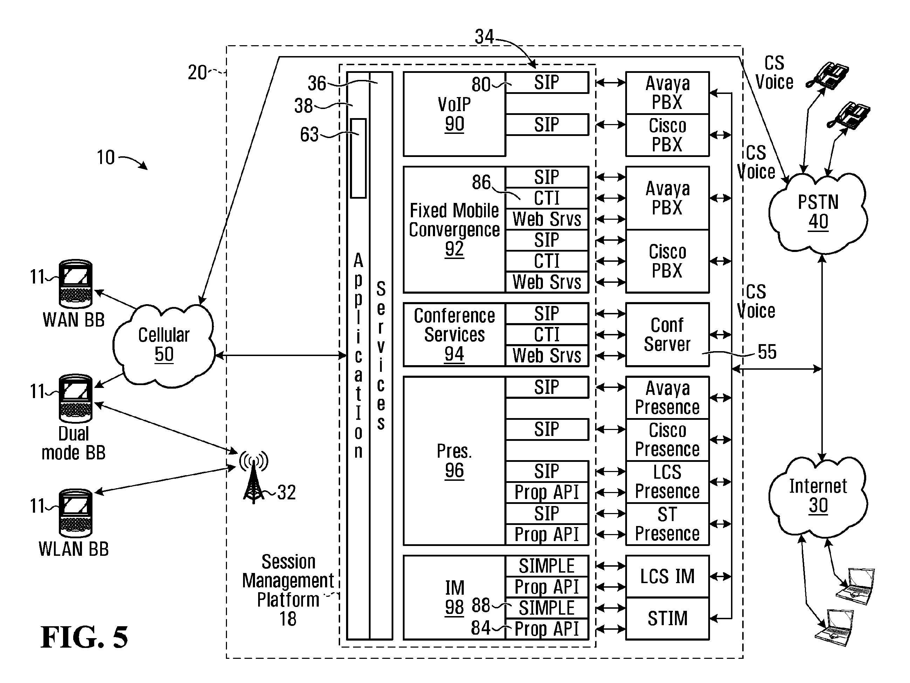

Reference is now made to **FIG. 5****,** which shows another embodiment of the enterprise communications system **14** with a Third Party Call Control architecture. In this embodiment, the SMP **18** is a multi-layer platform that includes a protocol layer **34,** a services layer **36** and an application layer **38.** The protocol layer **34** includes a plurality of interface protocols configured for enabling operation of corresponding applications in the application layer **38.** The services layer **36** includes a plurality of services that can be leveraged by the interface protocols to create richer applications. Finally, the application layer **38** includes a plurality of applications that are exposed out to the communication devices and that leverage corresponding ones of the services and interface protocols for enabling the applications.

Specifically, the protocol layer **34** preferably includes protocols which allow media to be controlled separate from data. For example, the protocol layer **34** can include, among other things, a Session Initiation Protocol or SIP **80,** a Web Services protocol **82,** an Application Programming Interface or API **84,** a Computer Telephony Integration protocol or CTI **86,** and a Session Initiation Protocol for Instant Messaging and Presence Leveraging Extensions or SIMPLE protocol **88.** It is contemplated that the interface protocols **80-88** are plug-ins that can interface directly with corresponding servers in the enterprise network **20,** which will be further described below.

For the purposes of this disclosure, SIP **80** will be utilized, although it is appreciated that the system **10** can operate using the above disclosed or additional protocols. As known by those of ordinary skill in the art, SIP is the IETF (Internet Engineering Task Force) standard for multimedia session management, and more specifically is an application-layer control protocol for establishing, maintaining, modifying and terminating multimedia sessions between two or more endpoints. As further known by those of ordinary skill in the art, the SIP protocol **80** includes two interfaces for signaling: SIP-Trunk (hereinafter referred to as "SIP-T") and SIP-Line (hereinafter referred to as "SIP-L"). Specifically, the SIP-T interface is utilized when the endpoint is a non-specific entity or not registered (i.e., when communicating between two network entities). In contrast, the SIP-L interface is utilized when the endpoint is registered (i.e., when dialing to a specific extension). The specific operation of the system **10** utilizing SIP **80** will be described in further detail below.

The SMP **18** also includes a plurality of enablers, among other things, a VoIP enabler **90,** a Fixed Mobile Convergence or FMC enabler **92,** a conference services enabler **94,** a presence enabler **96** and an Instant Messaging or IM enabler **98.** Each of the enablers **90-98** are used by corresponding services in the services layer **36** that combine one or more of the enablers. Each of the applications in the application layer **38** is then combined with one or more of the services to perform the desired application. For example, a phone call service may use the VoIP or PBX enabler, and an emergency response application may use the phone call service, an Instant Messenger service, a video call service, and email service and/or a conference service.

The application layer **38** may include a conference services application **63** that, together with the conference services enabler **94,** enables multiple communication devices (including desk telephones and personal computers) to participate in a conference call through use of a centralized conference server **55.** As seen in **FIG. 5****,** the conference server **55** is provided in the enterprise network **20** and is in communication with the conference services enabler **94** preferably through the SIP protocol **80,** although it is recognized that additional protocols that control media separate from data may be appropriate, such as the Web Services protocol **82** or the CTI protocol **86.** As will be described in further detail below, the conference call server **55** is configured for directing media and data streams to and from one or more communication devices (i.e., mobile devices **11,** telephones **17,** and computers **15).**

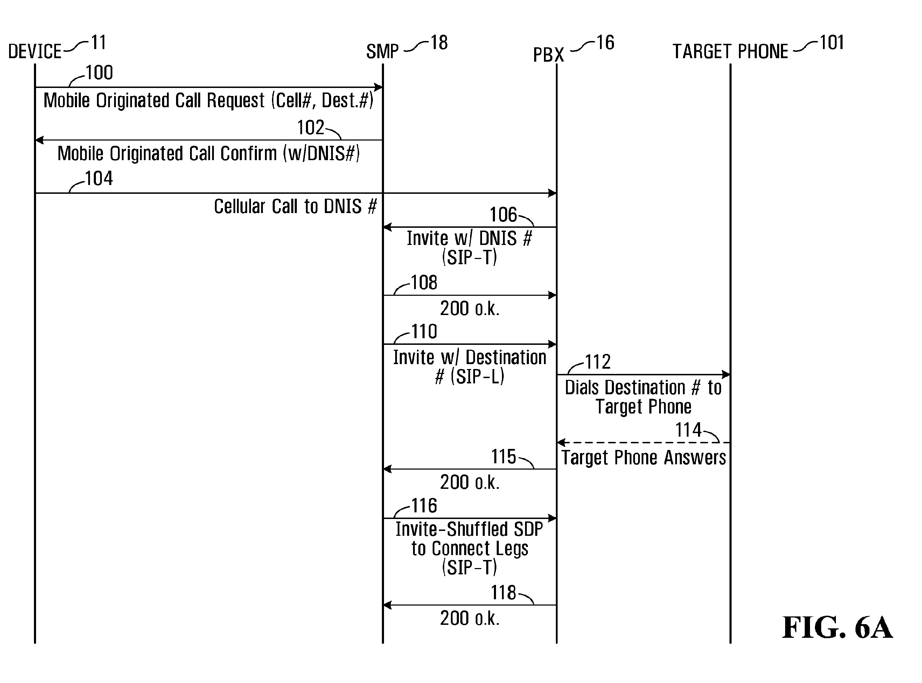

Turning now to **FIGS. 6A** through **7B****,** the general operation of the system **10** using SIP **80** as the signaling protocol will be discussed, although it is recognized that the present system is not limited to the processes discussed herein. The signaling descriptions that follow are based on Third Party Call Control architecture, such as that illustrated in **FIGS. 3** or **5****.** It will be appreciated that similar but slightly modified signaling may be used in a First Party Call Control architecture, wherein the PBX **16** will pass media through to the SMP **18** for direct media handling by the SMP **18.** Variations in the signaling to adapt to various architectures will be appreciated by those ordinarily skilled in the art.

**FIG. 6A** provides a signaling diagram for a call originating from one of the mobile devices **11** to a target phone **101** connected to a Private Branch Exchange Server or PBX **16** provided within the enterprise network **20.** First, the device **11** sends a mobile originated call request with its cellular number and the destination number of the target phone **101** to the SMP **18** (block **100).** In some embodiments, the mobile originated call request may be sent via the WLAN through the enterprise server **12.** In another embodiment, the call request may be sent via the PLMN/PSTN through the PBX **16,** for example as an SMS message or using another messaging operation. The SMP **18** confirms the call request by sending the DNIS number to the device **11** (block **102).** Next, the device **11** makes a cellular call using the DNIS number, which is received by the PBX **16** (block **104).** As the DNIS has been configured in the PBX **16** to be routed to the SMP **18** via SIP-T, in response to the incoming call, the PBX **16** sends an invite over SIP-T with the DNIS number to the SMP **18** (block **106).** The SMP **18** matches the incoming call with the expected call from the mobile, and if correct, acknowledges the invite by sending a **200** OK signal to the PBX **16,** indicating that the mobile call leg is established (block **108).**

The SMP **18** then sets up the outgoing call leg to the destination. It does this by sending an invite over SIP-L to the PBX **16** with the destination number of the target phone (block **110).** SIP-L is used so that the call can be correctly attributed to the individual within the organization within any call records that are being maintained by the PBX **16.** When the invite is received, the PBX **16** dials the destination number to the target phone **101** (block **112),** and the target phone **101** answers the call (block **114).** When the target phone **101** is answered, the PBX **16** sends a **200** OK signal to the SMP **18** indicating that the target phone **101** is ready to receive data (block **115).** The SMP **18** then sends an invite over SIP-T to the PBX **16** and shuffles the SDP (Session Description Protocol, as known to those of ordinary skill in the art) to connect the call legs (block **116).** When the call legs are connected, the PBX **16** sends a second **200** OK signal to the SMP **18** (block **118),** and the users of the device **11** and target phone **101** can communicate with each other.

Note that between the cellular call leg being established and the outgoing call leg being answered, the mobile user hears ringing tones. These ringing tones may be provided by the PBX **16** using the presentation of early media from the outgoing call leg, or they may be generated locally on the device **11** if early media is not available. In the latter case, it will be necessary to localize the ringing tone to match the tone normally heard with a call through the PBX **16.**

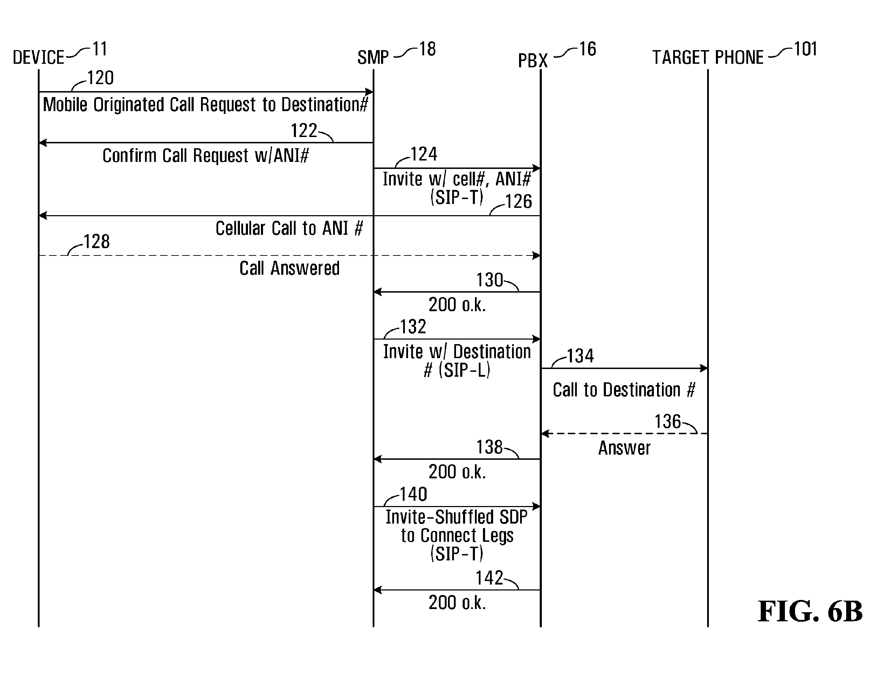

The above description is known as a "mobile initiated" call, because the SMP **18** provides the mobile device **11** with the DNIS number into which the mobile device **11** has called. Alternatively, the mobile originated call could be "PBX initiated", as shown in **FIG. 6B****.** Specifically, in a PBX-initiated call, upon receipt of the mobile originated call request (block **120),** the SMP **18** confirms receipt of the call to the mobile device **11** with an ANI number (block **122),** which the mobile device uses to identify the incoming call from the PBX **16.** The PBX **16** then sends an invite over SIP-T to the PBX **16** with the cellular number of the device and the ANI number that is attached to the outgoing call (block **124).** Upon receipt of the invite, the PBX **16** makes a cellular call to the device **11** (block **126),** which is answered by the device (block **128).** The device **11** checks the ANI number in the incoming call to confirm if the number is actually from the PBX **16.** If the ANI number is stripped for any particular reason, then the device **11** may be configured to answer the call as a regular cellular call, or it may reject the call as unknown. When the device **11** answers the PBX-initiated call, the PBX **16** sends a **200** OK signal to the SMP **18,** indicating that the call leg to the device is established (block **130).**

In response, the SMP **18** sends an invite over SIP-L with the destination number of the target phone **101** to the PBX **16** (block **132).** When the invite is received at the PBX **16,** the PBX dials the destination number to the target phone **101** (block **134),** the target phone **101** picks up the call (block **136),** and a **200** OK signal is sent from the PBX **16** to the SMP **18** (block **138),** indicating that the target phone **101** is also ready to receive data. In response to the **200** OK, the SMP **18** sends an invite to the PBX **16,** shuffling the SDP to connect the call legs (block **140).** Finally, when the call legs are connected, the PBX **16** sends a second **200** OK signal to the SMP **18,** and the users of the device **11** and target phone **101** are able to communicate with each other.

In both instances, the SMP **18** is performing third party call control of the two call legs, the PBX **16** remaining in control of the call. The decision of whether to proceed with a mobile-initiated call or a PBX-initiated call can be set by policy. Specifically, the option to select either mobile-initiated or PBX-initiated calls is a feature provided in the SMP **18,** and an administrator for the enterprise network **20** can determine which setting to use. For example, in some cases it may be more cost effective for the corporation to utilize PBX-initiated calls rather than mobile-initiated calls, and vice versa. However, it is appreciated that the system **10** is not limited to the above processes.

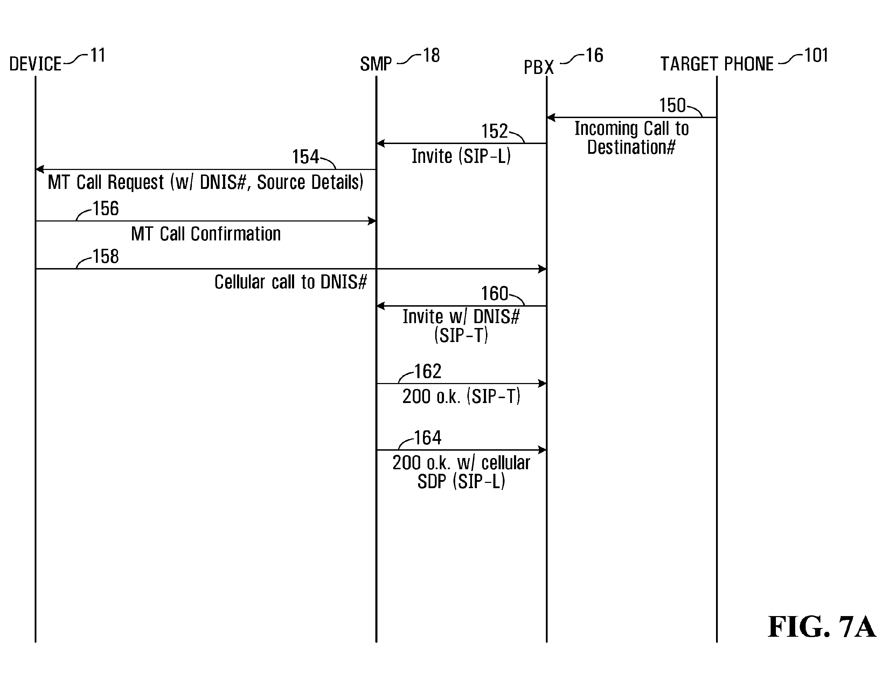

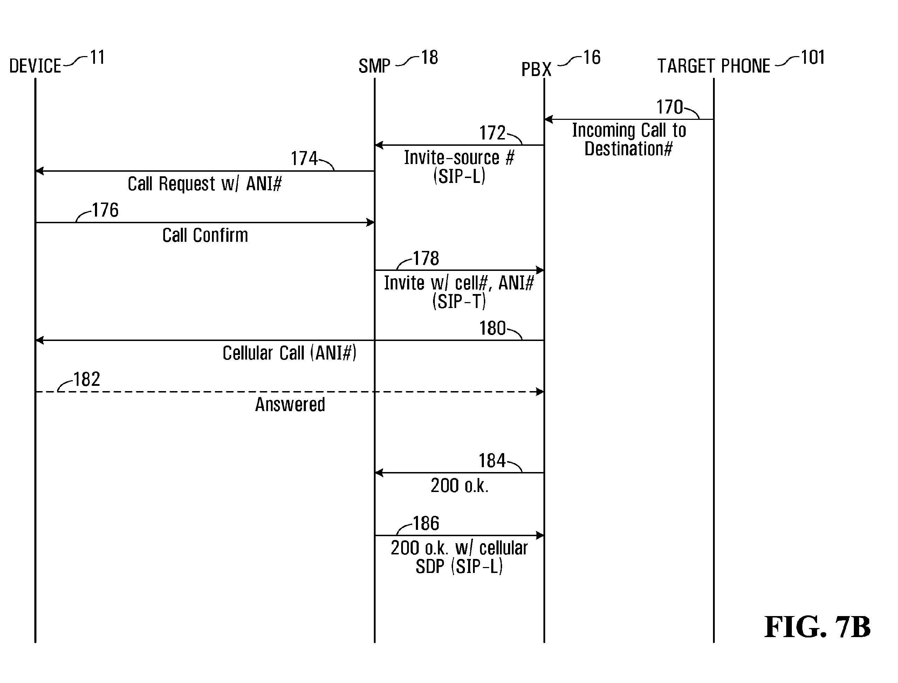

**FIGS. 7A** and **7B** are signaling diagrams illustrating a mobile terminated call utilizing SIP **80.** Specifically, and for the purposes of this disclosure, the target phone **101** is originating the call, which will send a call to the mobile device. Turning first to **FIG. 7A****,** an incoming call is made from the target phone **101** to the PBX **16** (block **150).** When the call is received at the PBX **16,** the PBX **16** sends an invite to the SMP **18** over SIP-L (block **152).**

In response to the invite, the SMP **18** sends a call request with the DNIS number and source details to the device **11** (block **154),** which is confirmed to the SMP (block **156).** In addition to confirming the call, the mobile device **11** sends a cellular call to the DNIS number at the PBX **16** (block **158).** Again, as the DNIS number is routed in the dialing plans to the SMP **18,** upon receipt of the cellular call, the PBX **16** sends an invite over SIP-T to the SMP **18** with the DNIS number (block **160).** In response to the invite, a **"200** OK" signal is sent over SIP-T from the SMP **18** to the PBX **16,** acknowledging that the call leg to the mobile device **11** is established (block **162).** Finally, the initial invite (block **152)** is acknowledged with the **"200** OK" signal with the cellular SDP, at which point the call legs are joined and the target phone **101** and device **11** can communicate with each other on the call.

The diagram shown in **FIG. 7A** illustrates a "mobile-initiated" call, because, as discussed above with respect to **FIGS 6A** and **6B****,** the SMP **18** presents the mobile device **11** with the DNIS number at the PBX **16** into which to call. However, it is also possible to employ a "PBX-initiated" mobile terminated call, as shown in **FIG. 7B****,** where the PBX **16** sends an incoming call to the device **11** with the ANI number of the target phone **101.**

Specifically, similar to the mobile initiated call described above and shown in **FIG. 7A****,** the target phone **101** sends an incoming call to the destination number of the device, which is received at the PBX **16** (block **170).** Upon receipt of the call, the PBX **16** sends an invite over SIP-L to the SMP **18** (block **172)** with the source number of the target phone **101.** In response to the invite, the SMP **18** sends a call request with the source number to the device **11** (block **174),** with the ANI number the device should expect in the incoming call, the call request being confirmed by the device (block **176).** At this point in the PBX-initiated call, the SMP **18** sends an invite over SIP-T to the PBX **16** with the cellular number and ANI number to use (block **178),** prompting the PBX **16** to make a cellular call to the device **11** with the ANI number (block **180),** prompting the device to ring. The device **11** answers the call (block **182),** and a **"200** OK" signal is sent from the PBX **16** to the SMP **18,** acknowledging that the cellular call leg to the device **11** is established (block **184).** In response, a **"200** OK" signal is also sent from the SMP **18** to the PBX **16,** acknowledging that the call leg to the target phone **101** is also established (block **186).** The SMP **18** shuffles the SDP to connect the call legs, the call legs are joined, and the target phone **101** and device **11** can communicate with each other on the call.

As discussed above with respect to **FIGS. 6A** and **6B****,** the SMP **18** remains in control of the signaling between the target phone **101** and the mobile device **11** in both the mobile-initiated and PBX-initiated calls. Again, the decision to proceed with a mobile-initiated call or a PBX-initiated call is based on policy and may be set by a system administrator. In some cases, it may be more efficient or cost effective for the administrator to decide that PBX-initiated calls should be used, and in other cases, it may be more efficient or cost effective for mobile-initiated calls to be utilized. As these policy decisions may vary by organization and are not imperative to the scope of the present application, they will not be discussed in further detail.

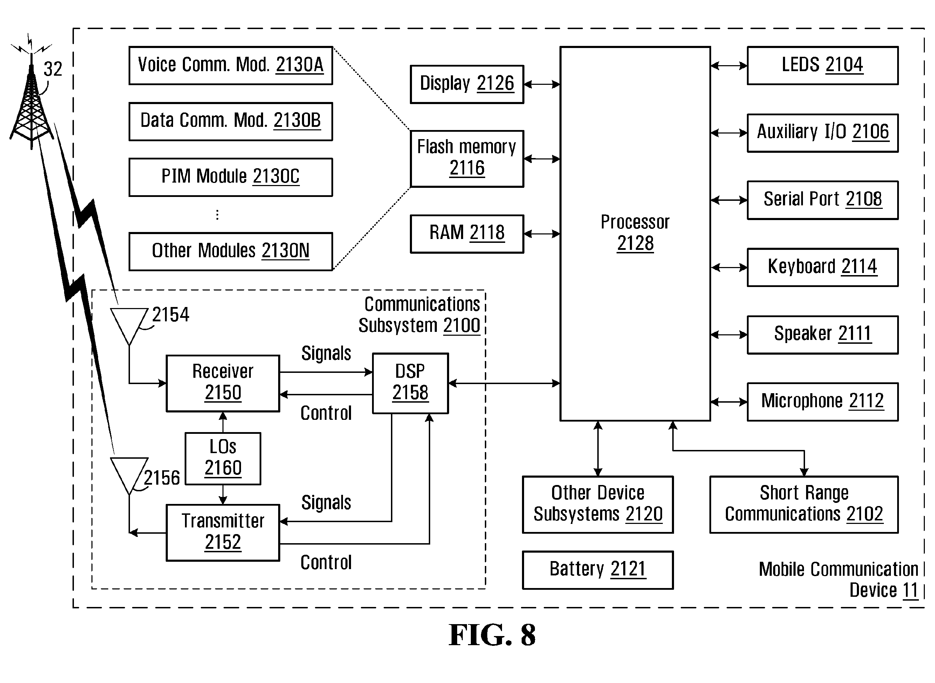

As described above, mobile device **11** may be used to both initiate and receive calls, including conference calls. Components of exemplary mobile device **11** will next be described in conjunction with **FIG. 8****.**

**FIG. 8** illustrates mobile device **11** including a housing, an input device (a keyboard **2114),** and an output device (a display **2126),** which is preferably a full graphic Liquid Crystal Display (LCD). Other types of output devices may alternatively be utilized. A processing device (a microprocessor **2128)** is shown schematically in **FIG. 8** as coupled between the keyboard **2114** and the display **2126.** The microprocessor **2128** controls the operation of the display **2126,** as well as the overall operation of the mobile device **11,** in response to actuation of keys on the keyboard **2114** by a user.

The housing may be elongated vertically, or may take on other sizes and shapes (including clamshell housing structures). The keyboard may include a mode selection key, or other hardware or software for switching between text entry and telephony entry.

In addition to the microprocessor **2128,** other parts of the mobile device **11** are shown schematically in **FIG. 8****.** These include: a communications subsystem **2100;** a short-range communications subsystem **2102;** the keyboard **2114** and the display **2126,** along with other input/output devices including a set of auxiliary I/O devices **2106,** a serial port **2108,** a speaker **2111** and a microphone **2112;** as well as memory devices (which are computer-readable media) including a flash memory **2116** and a Random Access Memory (RAM) **2118;** and various other device subsystems **2120.** The mobile device **11** may have a battery **2121** to power the active elements of the mobile device **11.** The mobile device **11** is preferably a two-way radio frequency (RF) communication device having voice and data communication capabilities. In addition, the mobile device **11** preferably has the capability to communicate with other computer systems via the Internet.

Operating system software executed by the microprocessor **2128** is preferably stored in a persistent store, such as the flash memory **2116,** but may be stored in other types of memory devices, such as a read only memory (ROM) or similar storage element. In addition, system software, specific device applications, or parts thereof, may be temporarily loaded into a volatile store, such as the RAM **2118.** Communication signals received by the mobile device may also be stored to the RAM **2118.**

The microprocessor **2128,** in addition to its operating system functions, enables execution of software applications on the mobile device **11.** A predetermined set of software applications that control basic device operations, such as a voice communications module **2130A** and a data communications module **2130B,** may be installed on the mobile device **11** during manufacture. In addition, a personal information manager (PIM) application module **2130C** may also be installed on the mobile device **11** during manufacture. The PIM application is preferably capable of organizing and managing data items, such as e-mail, calendar events, voice mails, appointments, and task items. The PIM application is also preferably capable of sending and receiving data items via a wireless network **32.** Preferably, the data items managed by the PIM application are seamlessly integrated, synchronized and updated via the wireless network **32** with the device user's corresponding data items stored or associated with a host computer system. As well, additional software modules, illustrated as other software modules **2130N,** may be installed during manufacture.

Communication functions, including data and voice communications, are performed through the communication subsystem **2100,** and possibly through the short-range communications subsystem **2102.** The communication subsystem **2100** includes a receiver **2150,** a transmitter **2152** and one or more antennas, illustrated as a receive antenna **2154** and a transmit antenna **2156.** In addition, the communication subsystem **2100** also includes a processing module, such as a digital signal processor (DSP) **2158,** and local oscillators (LOs) **2160.** The specific design and implementation of the communication subsystem **2100** is dependent upon the communication network in which the mobile device **11** is intended to operate. For example, the communication subsystem **2100** of the mobile device **11** may be designed to operate with the Mobitex™, DataTAC™ or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access CDMA, Personal Communications Service (PCS), Global System for Mobile Communications (GSM), etc. Other types of data and voice networks, both separate and integrated, may also be utilized with the mobile device **11.**

Network access requirements vary depending upon the type of communication system. For example, in the Mobitex™ and DataTAC™ networks, mobile devices are registered on the network using a unique Personal Identification Number (PIN) associated with each device. In GPRS networks, however, network access is associated with a subscriber or user of a device. A GPRS device therefore requires a subscriber identity module, commonly referred to as a Subscriber Identity Module (SIM) card, in order to operate on a GPRS network.

When required network registration or activation procedures have been completed, the mobile device **11** may send and receive communication signals over the communication network **2110.** Signals received from the communication network **2110** by the receive antenna **2154** are routed to the receiver **2150,** which provides for signal amplification, frequency down conversion, filtering, channel selection, etc., and may also provide analog to digital conversion. Analog-to-digital conversion of the received signal allows the DSP **2158** to perform more complex communication functions, such as demodulation and decoding. In a similar manner, signals to be transmitted to the network **32** are processed (e.g., modulated and encoded) by the DSP **2158** and are then provided to the transmitter **2152** for digital to analog conversion, frequency up conversion, filtering, amplification and transmission to the communication network **32** (or networks) via the transmit antenna **2156.**

In addition to processing communication signals, the DSP **2158** provides for control of the receiver **2150** and the transmitter **2152.** For example, gains applied to communication signals in the receiver **2150** and the transmitter **2152** may be adaptively controlled through automatic gain control algorithms implemented in the DSP **2158.**

In a data communication mode, a received signal, such as a text message or web page download, is processed by the communication subsystem **2100** and is input to the microprocessor **2128.** The received signal is then further processed by the microprocessor **2128** for an output to the display **2126,** or alternatively to some other auxiliary I/O devices **2106.** A device user may also compose data items, such as e-mail messages, using the keyboard **2114** and/or some other auxiliary I/O device **2106,** such as a touchpad, a rocker switch, a trackball, or some other type of input device. The composed data items may then be transmitted over the communication network **32** via the communication subsystem **2100.**

In a voice communication mode, overall operation of the device is substantially similar to the data communication mode, except that received signals are output to a speaker **2111,** and signals for transmission are generated by a microphone **2112.** Alternative voice or audio I/O subsystems, such as a voice message recording subsystem, may also be implemented on the device **11.** In addition, the display **2126** may also be utilized in voice communication mode, for example, to display the identity of a calling party, the duration of a voice call, or other voice call related information.

The short-range communications subsystem **2102** enables communication between the mobile device **11** and other proximate systems or devices, which need not necessarily be similar devices. For example, the short-range communications subsystem may include an infrared device and associated circuits and components, or a Bluetooth™ communication module to provide for communication with similarly-enabled systems and devices.

To provide context and background for the disclosed methods, the following disclosure begins by first describing the process of creating a conference call request. Next, the process of accepting a conference call request is described. Finally, the process of joining a conference call, which process includes the disclosed methods, is described.

By way of background, a host (or moderator) may initiate a conference call meeting in one of several ways. A typical method is for the host to create and send a meeting request addressed to one or more invited participants using a messaging application such as an email application. The moderator may enter in the meeting request a list of invited participants (or "attendees"), the time of the conference call, a dial-in number to the conference call bridge and a security code. Upon receipt of the meeting request, each invited participant may choose to accept, reject or modify the meeting request. Upon accepting the meeting request, an entry associated with the conference call event may be entered into the attendee's electronic calendar.

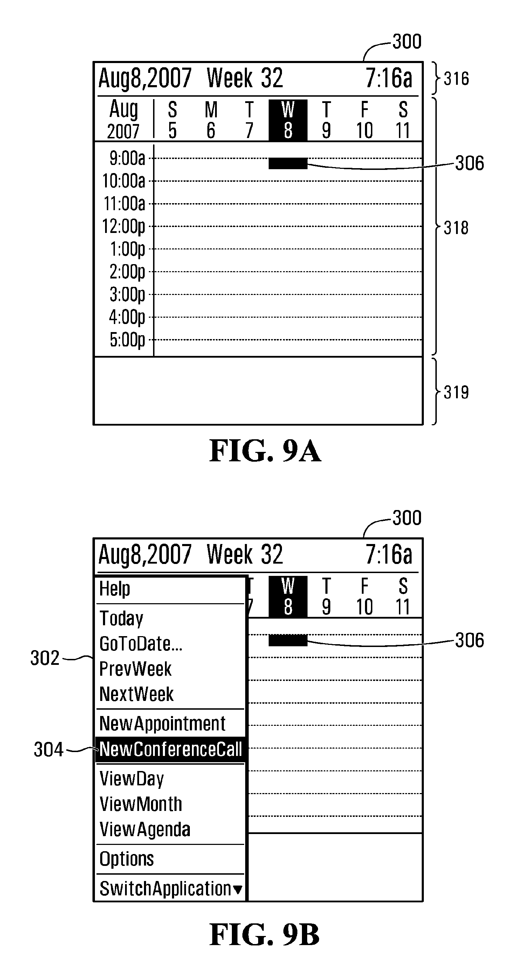

**FIGS. 9A** to **9F** illustrate how a host/moderator ("the user") may send out a conference call request to one or more desired participants using exemplary mobile device **11.** As previously explained, PIM application module **2130C,** which is capable of managing data items such as email and calendar events, may be installed on mobile device **11 (****FIG. 8****).** In particular, PIM application module **2130C** may include email and calendar applications in conjunction with which the disclosed method may function, as will become apparent.

Upon launching the calendar application of PIM module **2130C,** the host may be presented with exemplary user interface screen **300 (****FIG. 9A****)** on display **2126.** Screen **300** may be divided into a status bar portion **316** and a calendar portion **318.** An indication of the current date ("Aug 8, 2007"), time ("7:16a") and week of the year ("Week 32") may be displayed in status bar potion **316.** Calendar portion **318** may be a grid with the days of the current week displayed along the x-axis and hours of the day on displayed along the y-axis. Such a calendar view may be referred to as a "week view". This is in contrast to a single-day "day view", or a multi-day "agenda view" as will be further discussed below. Additionally, a cursor **306** may be provided as a navigational aid on screen **300 (****FIG. 9B****).** As illustrated, cursor **306** is situated on the 9:00 to 9:30a timeslot on Wednesday, August 8.

While on screen **300,** the host may call up menu **302** by, for example, clicking the trackball (or other auxiliary I/O device **2106)** of device **11 (****FIG. 9B****).** Conveniently, menu **302** may contain a plurality of contextual actions (conventionally known as "menu items") available to the host. That is, the actions presented to the host in menu **302** may conveniently be only those that a user would logically be expected to invoke when presented with screen **300.** For example, it may be expected that a user would want to show calendar events for the current day ("Today"); view calendar events for a particular date ("Go To Date..."); change the calendar view to "day view" ("View Day"), "month view" ("View Month") or "agenda view" ("View Agenda"); create a new appointment entry ("New Appointment"), etc. Notably, the user may also be given the option of creating a new conference call event ("New Conference Call" action **304).**

As is well known in the art, the active menu item in menu **302** may be highlighted. For instance, as shown in **FIG. 9B****,** the "New Conference Call" action **304** is the active menu item. A user may navigate up or down menu **302** to highlight other menu items by, for example, scrolling trackball **2106** up or down. To select a menu item, the user may highlight the action then click trackball **2106.**

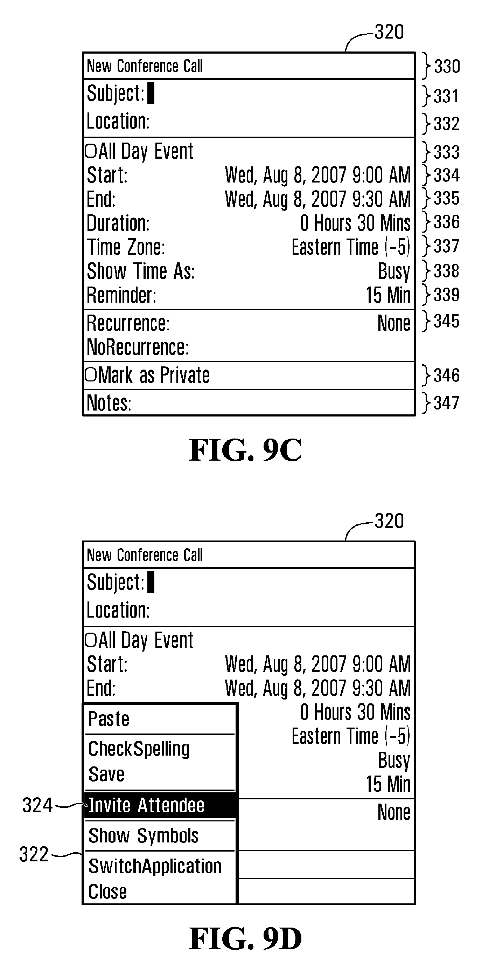

After the host has selected "New Conference Call" item **304** from menu **302,** he or she may be presented with screen **320 (****FIG. 9C****).** Title bar **330** identifies screen **320** as associated with the "New Conference Call" action. Screen **320** may include several editable (using one or a combination of keyboard **2114** and I/O device **2106)** text fields, including "Subject::" field **331,** "Location:" field **332,** "Start:" field **334,** "End: " field **335,** and "Notes:" field **347.** Conveniently, and referring back to **FIG. 9B****,** the values of "Start:" field **334** and "End:" field **335** may be automatically set based on the position of cursor **306** at the time the user calls up menu **304.**

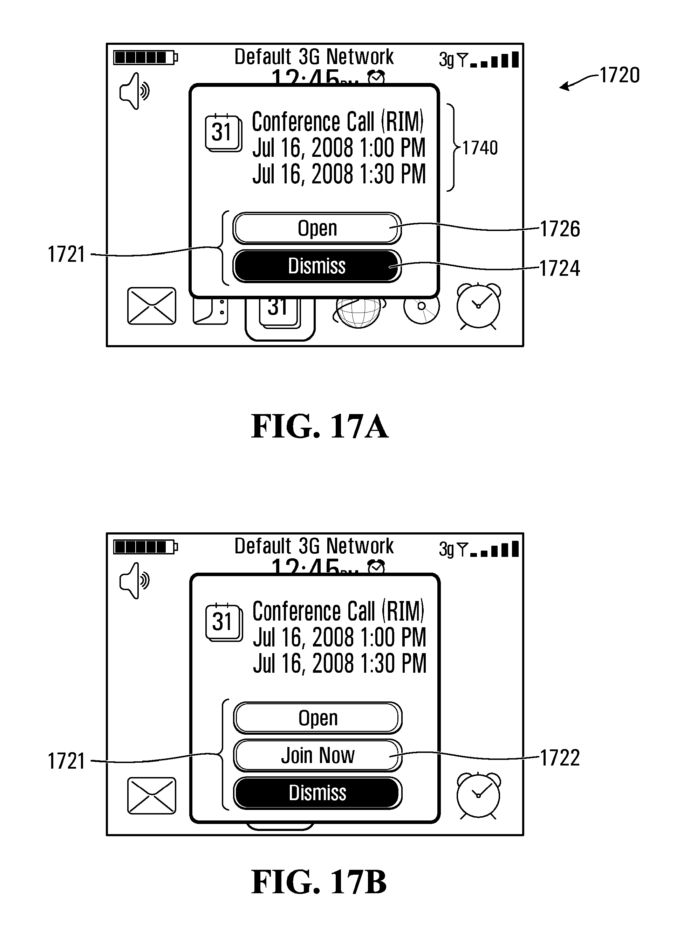

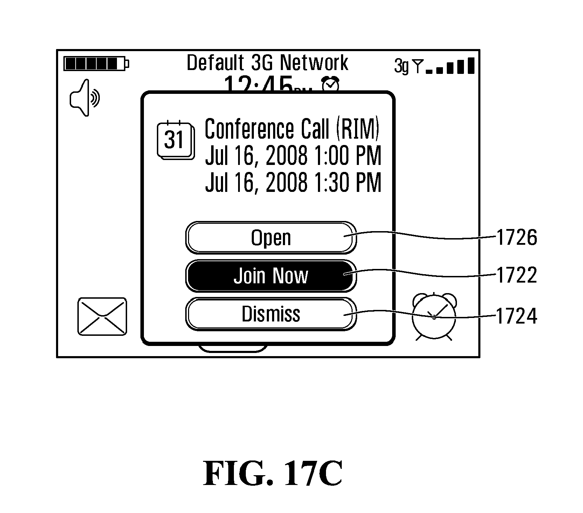

Notably, the host may also set a value for "Reminder: " field **339** at screen **320.** As illustrated, because the value of "Reminder: " field **339** is set to **"15** min", a reminder screen **(****FIG. 17****)** will pop up on display **2126** of each participant's mobile device **15** minutes before the designated start time of the conference call, in this example, 9:00am on August, 8, 2007. Of course, the host could change the value of "Reminder: " field **339** to another time preceding the designated start time in a conventional manner (e.g. by typing another value in or picking another value from a pick list).

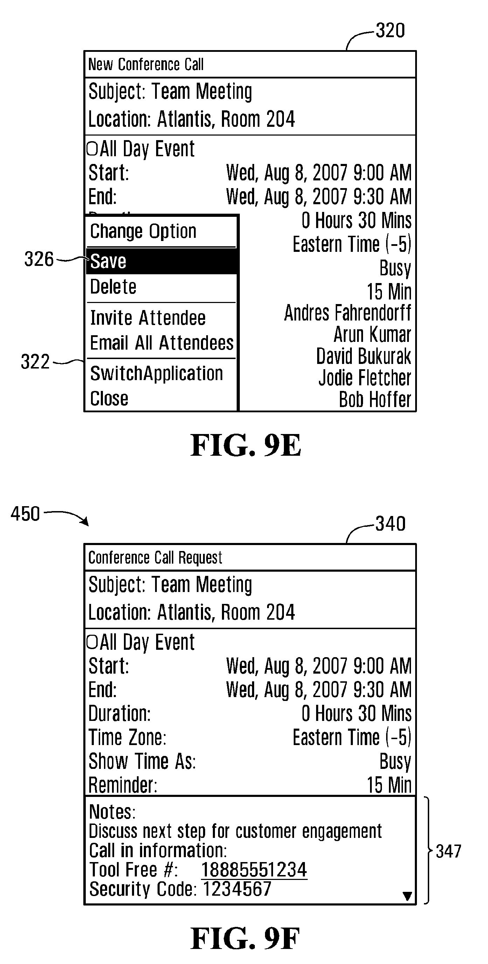

The host may, using keyboard **2114,** enter text in "Subject::" field **331,** "Location:" field **332,** and "Notes:" field **347** (see **FIG. 9E** and **9F****).** In the "Notes:" field, the host may type in free-form text, including, for example, a description of the purpose of the conference call, and call-information, such as the dial-in number for the conference bridge (e.g. conference bridge **64).** More specifically, as illustrated in **FIG. 9F****,** the host has typed the following text into "Notes: " field **347;** "Discuss next steps for customer engagement." and has provided dial-in information consisting of a toll-free dial-in number to the conference bridge ("1 888 555 1234"), e.g. conference bridge **64,** and a security code ("1234567"). As will be further detailed below, the conference bridge dial-in number may be underlined, indicating that it is actionable text.

To invite participants to the conference call, the host may click trackball **2106** on screen **320 (****FIG. 9C****)** to call up menu **322** as shown in **FIG. 9D****.** Menu **322** includes an "Invite Attendee" item **324.** After selecting the "Invite Attendee" item **324,** the host may be taken to an address book, also part of PIM application module **2130C.** The host may then select one or more contacts in the address book in a conventional manner (not shown). Alternatively, the host may be presented with a text field into which he or she may type the email address(es) of one or more attendees also in a conventional manner (not shown).

Once all desired attendees have been added, the host may scroll up to, and select, the "Save" item **326** on menu **322** (see **FIG. 9E****).** The completed conference call request **450** (screen **340)** is shown in **FIG. 9F** (note that the list of all invited attendees is not shown in exemplary screen **340).** Conference call request **450** is thereafter sent via email, for example, over wireless network **32,** to each invited attendee.

The function of fields **333, 336, 337, 338, 345,** and **346** are beyond the scope of this disclosure, and therefore will not be discussed. However, their uses should be apparent to those of ordinary skill in the art.

Instead of the host creating a conference call request using the "New Conference Call" menu item, as described above, as may be appreciated by one of ordinary skill in the art, an existing meeting calendar item may be converted into a conference call meeting by filling in the fields specific to a conference call meeting (e.g. call-in details).

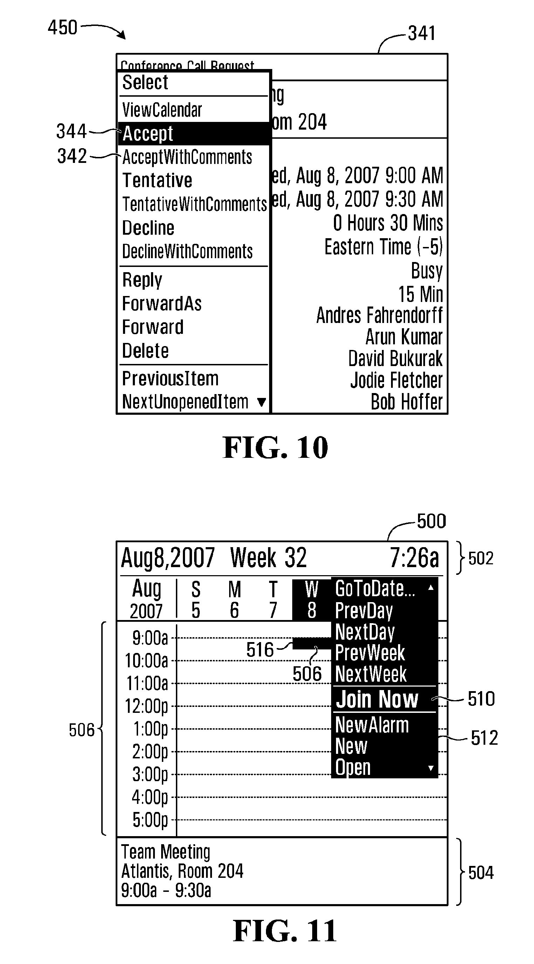

**FIG. 10** is a screenshot of exemplary screen **341** that is displayed to a recipient of the conference call request **450.** The recipient may receive conference call request **450** as an email on his or her mobile device **11'** (not shown). Mobile device **11'** may be identical to or may contain the same functional components as previously described mobile device **11.**

The recipient may open the email in a conventional manner and be presented with screen **341.** Next, the recipient may click on screen **341,** using for example, trackball **2106,** to call up menu **342.** Like menu **322,** menu **342** may contain a plurality of contextual menu items, including the active highlighted "Accept:" item **344.** To accept conference call request **450,** the recipient may select "Accept:" item **344** by clicking trackball **2106.** When the recipient accepts conference call request **450,** an entry associated with the conference call event may be entered into his or her electronic calendar.

**FIG. 11** is a screenshot of the recipient's calendar. It may be noted that user interface screen **500** is the same as user interface screen **300 (****FIG. 9A****),** except with different data displayed. Specifically, title bar **502** of screen **500,** like title bar **316** of screen **300,** displays the current date, week of the year and time. Portion **506** of the screen **500** is also a calendar "week view" like portion **318** of screen **300,** except that screen **500** displays the recipient's calendar whereas screen **300** displays the host's calendar.

Once the recipient accepts conference call request **450,** bar **516,** associated with conference call request **450,** is added to the recipient's calendar. (Once the recipient has accepted conference call request **450,** he or she will hereinafter be referred to as an "attendee".) Specifically, bar **516** indicates that the 9:00-9:30a timeslot on Wednesday, August 8 is filled, i.e. the attendee has a scheduled event, in this example, a conference call.

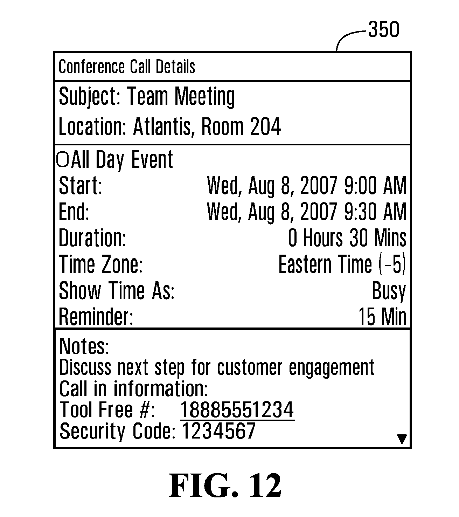

As illustrated, cursor **506** is situated on bar **516.** When in this configuration (i.e. when a user is "mouse-ing over" bar **516),** some information about the event associated with bar **516** may be displayed in information panel **504.** It may be observed that information panel **504** merely displays the subject, location and time of the conference call event, however, does not display detailed information including information contained in the "Notes:" field. To remedy this, the attendee may call up screen **350,** entitled "Conference Call Details" **(****FIG. 12****),** by clicking on bar **516.**

At or prior to the designated meeting time, each attendee, including the host/moderator, dials in to the conference bridge. As previously discussed, an attendee may not recall the dial-in number and security code from memory. This is especially likely to be so when the attendee attends many different conference calls each with different dial-in numbers and security codes. Consequently, conventionally, at the designated meeting time, to obtain the necessary dial-in information and security code, an attendee would call up his or her calendar on his or her mobile device **11'** and select the user interface component associated with the conference call event (in this example, bar **516)** to bring up Conference Call Details screen **350.**

After retrieving the dial-in number and security code from the Conference Call Details screen **350,** the attendee would conventionally then manually dial the dial-in number. After connecting to the conference bridge, the attendee would manually enter the security code when prompted to do so. In certain embodiments of mobile device **11/11',** short-cuts may be available to relieve the user from having to manually dial the dial-in number. For instance, the dial-in number stored in the "Notes:" field, may be converted to actionable text such that, for example, clicking on the dial-in number brings up a menu. This menu may include a "Dial [phone number]" menu item. The "[Phone number]" portion would be automatically filled in by mobile device **11/11'.** Referring to **FIG. 12****,** rather than the attendee manually dialing each digit, the attendee, could instead, for example, click on the "1 888 555 1234" text in the "Notes:" field. He or she may then be presented with a menu that includes a "Dial 1 888 555 1234" menu item (not shown). A similar short-cut may be available to relieve the user from having to manually enter each digit of the security code.

Regardless of whether the attendee manually enters each digit of the dial-in number and/or security code, conventionally, the attendee must first call up his or her calendar, select the user interface component associated with the conference call event, call up a detailed view of the conference call event to retrieve the dial-in number and security code, initiate dialing of the dial-in number and then finally enter the security code. Only if the attendee perfectly enters the dial-in number and/or security code will he or she be put into the conference. Clearly, shortening this multi-step process is desirable. A shorter process may not only reduce the likelihood of user-error but may also save time since the user need not commence the sequence of actions needed to join the conference as far in advance of the designated meeting time.

To this end, in overview, with reference to **FIG. 11****,** a pre-set time before a conference call event, a "Join Now" menu item **510** may be added to the list of contextual menu items in menu **512.** With the inclusion of the "Join Now" menu item **510** in menu **512,** an attendee may more quickly join the conference call by calling up his or her calendar, navigating to the user interface component associated with the conference call event, i.e. bar **516,** clicking on bar **516** to bring up menu **512,** and activating the "Join Now" menu item **510.** Thus, the "Join Now" menu item is an added activatable component to request joinder to the conference call. On activating the "Join Now" menu item, device **11/11'** locates the stored information associated with the conference call in, for example, a database. As will be readily understood by one of ordinary skill in the art, the database may be stored in memory **2116 (****FIG. 8****)** of the device **11/11'** or somewhere on enterprise network **20** and accessed by device **11/11'** over wireless network **32 (****FIG. 1****).** The information associated with the conference call will be the dial-in number to the conference bridge and a security code. The device initiates connection with the conference call bridge in the manner described above in conjunction with **FIGS. 6A** and **6B****:** first dialing the conference call dial-in number and then, after a pause or after recognizing a voice prompt, entering the security code. The attendee is then joined into the conference.

Thus, conveniently, from the attendee's perspective, after selecting "Join Now" menu item **510,** he or she is automatically joined into the conference call. In contrast to the conventional method, he or she need not call up a detailed view of the conference call event, locate the dial-in number and security code and then subsequently dial the dial-in numbers and security code.

Furthermore, since the "Join Now" activatable component is only added to the menu a pre-set time before the beginning of the conference call (e.g., five minutes before), the risk of a user inadvertently trying to join a non-existent conference call is reduced. The "Join Now" activatable component can be removed again from the menu **512** after the scheduled end of the conference call which further assists in avoiding an inadvertent attempt to join a non-existent conference call. Thus, outside a time window between the pre-set time before the conference call event and the end time for the conference call event, the "Join Now" activatable component does not appear in menu **512.**

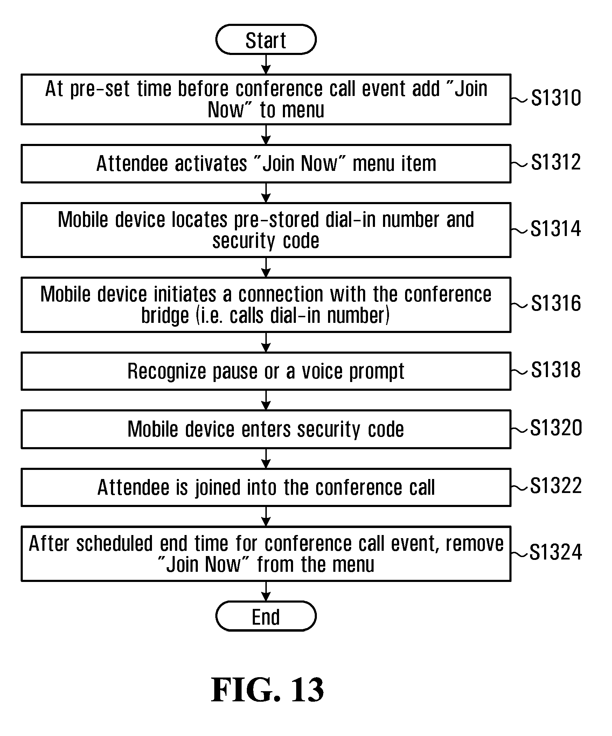

The operation of the processor **2218** in implementing the foregoing is described in conjunction with **FIG. 13****.** Turning to **FIG. 13****,** a pre-set time before the conference call event, the processor adds the "Join Now" component to menu **512** (whether or not the menu is currently displayed) **(S1310).** If the user activates the "Join Now" component **(S1312),** the stored conference call dial-in number and security code are located **(S1314)** and connection with the conference bridge is initiated **(S1316).** After a pause, or on recognizing a voice prompt **(S1318),** the security code is entered (**S1320**). Thereafter, the attendee is added to the conference call (**S1322**). At the time set for the end of the conference call, the "Join Now" component is removed from menu **512** (**S1324**).

Optionally, when the "Join Now" activatable component is added, or thereafter - such as when the conference call begins, it is pre-selected. This results in the highlighting of this component in menu **512,** as shown in **FIG. 11****.** With the "Join Now" component already selected, the user may activate this component with a single user action, such as a click on the component, or pressing an enter key.

In another embodiment, the "Join Now" component is present in menu **512** whenever this menu is called up but is only pre-selected commencing a pre-set time relative to the beginning of the conference call (e.g., one minute before the call). This embodiment also reduces the likelihood of a user inadvertently attempting to join a non-existent conference call.

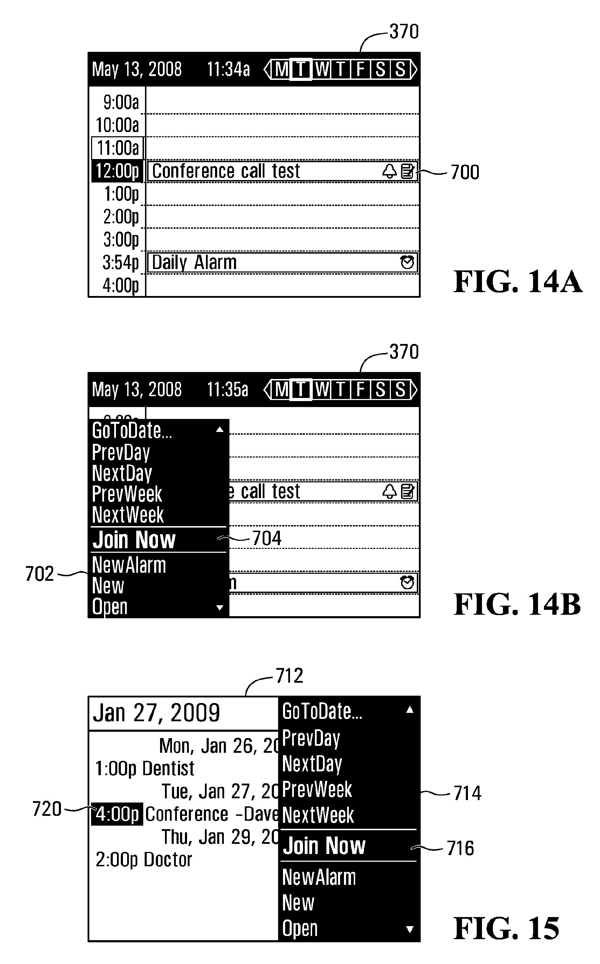

**FIGS. 14A** and **14B** depict a second embodiment of the disclosed method. In particular, **FIG. 14A** is a screenshot of screen **370** showing an attendee's calendar in "day view". In this example, as indicated by user interface component **700,** the attendee has accepted (or created), in the manner previously described, a conference call request, with the subject "Conference call test", scheduled for 12:30-1:30 on Tuesday, May 13, 2008. In accordance with the disclosed method, a pre-set time before the conference call event, a "Join Now" menu item **704** is added to menu **702.** Before or after this pre-set time, the attendee may activate user interface component **700,** to call up menu **702.** Once the Join Now" menu item **704** appears in menu **702,** the attendee may activate it and the attendee's mobile device then locates the information associated with the conference call (e.g. in a database) and initiates dialing of the appropriate telephone number.

**FIG. 15** is a screenshot of a screen **712** of a third embodiment of the disclosed method. Specifically, screen **712** shows an attendee's calendar in "agenda view". As indicated by user interface component **720,** this attendee has accepted (or created) a conference call request, with the subject "Conference-Dave", at 4:00pm on January 27, 2009. Again, in accordance with the disclosed method, a "Join Now" menu item **716** is added to menu **714** a pre-set time before the conference call event. The attendee may join the conference call thereafter by simply activating user interface component **720** to call up menu **714** and then activating "Join Now" menu item **716.** Upon activating "Join Now" menu item **716,** the attendee's mobile device locates the information associated with the conference call and initiates dialing of the appropriate telephone number and entry of the security code at the appropriate time **(****FIG. 13****).**

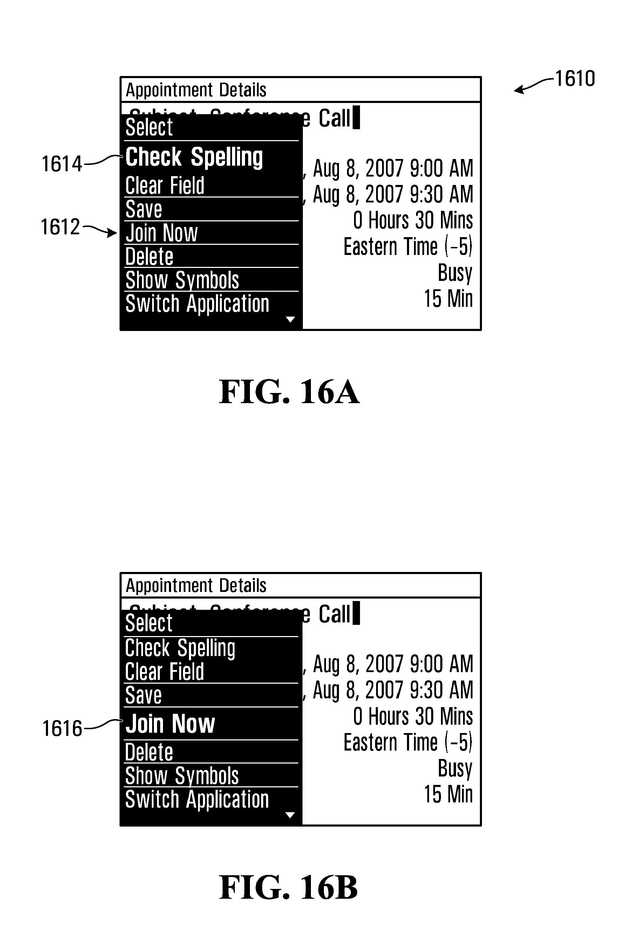

**FIG. 16A** is a screen shot of a user interface **1610** showing details of a conference call event where the user has activated a menu **1612** of user interface components. In this example embodiment, the processor of the mobile device has pre-selected the "Check Spelling" component **1614** so that when the menu is displayed, this component is highlighted. Referencing **FIG. 16B****,** a pre-set time before the beginning of the conference call event, the processor adds "Join Now" component **1616** to the menu and simultaneously deselects the "Check Spelling" component and selects instead the "Join Now" component so that when the menu is displayed, the "Join Now" component is highlighted. If the user then activates the "Join Now" component, the attendee's mobile device locates the information associated with the conference call (e.g. in a database) and initiates dialing of the appropriate telephone number.

Thus far, the described embodiments allow the user to select a "Join Now" menu item from a menu in various user interfaces associated with a calendar application (i.e. "day view", "agenda view", "week view", "details view"). However, the disclosed method is not so limited, as further described below.

**FIG. 17A** depicts yet another embodiment of the disclosed method. Referring back to **FIG. 9C****,** as previously described, the host/moderator may populate "Reminder" field **339** with a time value, e.g. 15 min. This has the effect of causing a reminder window **1720 (****FIG. 17****)** to pop up on display **2126** fifteen minutes preceding the time set for the commencement of the conference call. Reminder window **1720** may take precedence over any underlying windows such that it is the top-most window displayed on display **2126.** This reduces the likelihood that the user will miss the reminder because reminder window **1720,** is for example, hidden behind other windows.

Reminder window **1720** includes text **1740** describing the subject of the reminder (i.e., "Conference Call RIM") and time of the event that is the subject of the reminder (i.e., Jul 16, 2008 1:00pm to Jul 16, 2008 1:30pm). Conventionally, reminder window **1720** further includes buttons which provide a menu **1721** of options, specifically, a "Dismiss" button **1724** and an "Open" button **1726.** Additionally, while not shown, the reminder window may also have an "In a few minutes..." (often alternatively labeled "Snooze") button. As may be understood by those of ordinary skill in the art, selection by the user of "Dismiss" button **1724,** using, for example trackball **2106,** may have the effect of permanently hiding reminder screen **1720.** Selection of the "Open" button **1726** may result in the display of the conference call detail view of **FIGS. 16A, 16B****.** The "In a few minutes..." button, if present, may hide reminder screen **1720** for a pre-configured period of time, e.g. 5 minutes. Upon expiration of this pre-configured time period, reminder screen **1720** may again pop up on display **2126.** As illustrated, the "Dismiss" button **1724** may be pre-selected when the reminder window first pops up.

In accordance with the present disclosure, as shown in **FIG. 17B****,** "Join Now" button **1722,** is added to the menu **1721** of options in reminder window **1720** a pre-set time before the conference call event, e.g., five minutes before the conference call is scheduled to start. As illustrated, the "Dismiss" button may remain pre-selected. However, at a later time before the conference call is to start - e.g., one minute before the scheduled start of the conference - as shown in **FIG. 17C****,** the "Dismiss" button **1724** may be de-selected and the "Join Now" button **1722** may be pre-selected.

In an alternate embodiment, as shown in **FIG. 17C****, ,** again "Join Now" button **1722,** is added to the menu **1721** of options in reminder window **1720** a pre-set time before the conference call event, however, simultaneously with the addition of "Join Now" button **1722,** the "Dismiss" button **1724** is de-selected and the "Join Now" button **1722** is pre-selected.

In an alternate embodiment, the reminder window which first pops up a pre-set time before the conference call event is as shown in **FIG. 17B****.** Thus, the reminder window includes the "Join Now" component **1722** at first instance, but the "Dismiss" button is pre-selected. With this embodiment, optionally, at a later time before the conference call, the "Join Now" button becomes pre-selected, as shown in **FIG. 17C****.**

In a further embodiment, the reminder window which first pops up a pre-set time before the conference call event is as shown in **FIG. 17C****.** Thus, the reminder window includes the "Join Now" component **1722** at first instance and this component is pre-selected.

"Join Now" button **1722** functions in the same manner as previously described " in conjunction with Join Now" menu items **510, 704, 716,** and **1616** and flow diagram **1300 (****FIG. 13****).**

Conveniently, in both the calendar and reminder window embodiments, the attendee is able to initiate joining to conference call from displayed user interface without having to access a detailed view of the conference call event to obtain the dial-in number and security code, and thereafter, manually dialing in and entering the security code.

Certain adaptations and modifications of the described embodiments can be made. Therefore, the above discussed embodiments are considered to be illustrative and not restrictive.

For example, while the disclosed method has been described in conjunction with various views in the calendar application, as will be appreciated by those of ordinary skill in the art, other types of calendar views may be available (e.g. "month view"). To this end, a "Join Now" menu item could be added to a menu accessible through a user interface component associated with the conference call event in other calendar views.

Moreover, as described above, the calendar application and reminder window are two components of PIM application module **2130C.** However, PIM application module **2130C** may include other time management software applications such as a task list or journal. The disclosed method may also function in conjunction with these other time management software applications.

In a further alternative, the "Join Now" menu item may be added to a menu of the existing calendar application and as another button in a reminder window of mobile device **11/11'.** For example, an update to the calendar application may be installed on mobile device **11/11',** which update adds the "Join Now" functionality (and associated menu item) to a menu of the calendar application. Similarly, the application that displays reminder window **1720** may be updated, which update adds a "Join Now" button and associated functionality to the reminder window. In this regard, a dedicated conference call management application need not be installed on mobile device **11/11'.**

While the illustrated embodiments relate to conference call events in calendaring applications, other embodiments are also possible. For example, a web service may be accessible only during a certain period in a day. Accessing the web service may be stored as an event in a calendaring application and a reminder window with an "Access web service" button highlighted may pop up a pre-set time relative to the time marking the beginning of the period in which the web service is available. For example, the reminder window may pop up twenty minutes after the beginning of this period.

In a further alternative embodiment, a user may mark an email in an email application for follow up by a certain date/time. Typically, email applications display a list of emails, which list includes the sender and Re: line for each email. Upon selecting a listed email, the user may be presented with a menu which includes "Open", "Reply", "Forward" options. The "Open" option may be pre-selected by default. However, in accordance with the disclosed method, a pre-set time before the follow up by deadline, the "Open" option may be de-selected, and the "Reply" option pre-selected by default.

## Claims

1. A computer-implemented method for altering an interface, said method comprising:
displaying an interface (500, 370, 712, 1610, 1720) associated with an application having time-dependent events, said interface displaying at least one activatable component (510, 704, 716, 1614, 1726);
at a pre-set time relative to a time for one of said time-dependent events, altering said interface to add an added activatable component (510, 704, 716, 1616, 1722) to said interface or to set a pre-determined one of said at least one activatable component (510, 704, 716, 1616, 1722) of said interface as a selected component.

2. The method of claim 1 wherein said altering said interface adds an added activatable component to said interface and further comprising simultaneously setting said added selectable component as a selected component.

3. The method of claim 1 or claim 2 wherein said at least one activatable component is a plurality of activatable components providing a menu (512, 702, 714, 1612, 1721) of choices.

4. The method of any one of claims 1 to 3 wherein said application is a calendar application and said interface displays a conference call event.

5. The method of claim 4 wherein said altering said interface comprises adding an added activatable component (510, 704, 716, 1616, 1722) to request joinder to a conference call associated with said conference call event.

6. The method of claim 5 further comprising setting said added activatable component to request joinder to a conference call associated with said conference call event as a selected component.

7. The method of claim 5 or claim 6 further comprising upon receipt of an indication of activation of said activatable component to join said conference call, locating information associated with said conference call in a database (2116), said information comprising a telephone number for a conference call bridge; and initiating connection with said conference call bridge using said telephone number.

8. The method of claim 4 wherein said plurality of activatable components comprise an activatable component (510, 704, 716, 1616, 1722) to request joinder to a conference call associated with said conference call event.

9. The method of claim 8 wherein altering said interface comprises setting said activatable component to request joinder to a conference call associated with said conference call event as said selected component.

10. The method of claim 4, claim 8 or claim 9 wherein said interface displays a reminder window (1720) for said conference call event, said reminder window being presented a pre-selected time before said conference call event.

11. The method of any one of claim 8, claim 9, or claim 10 when dependent upon claim 8 or claim 9 further comprising, upon receipt of an indication of activation of said activatable component to join said conference call, locating in a database (2116) information associated with said conference call, said information including a telephone number for a conference call bridge; and initiating connection with said conference call bridge using said telephone number.

12. The method of claim 10 when dependent upon claim 5 wherein said altering said interface comprises adding an added activatable component (510, 704, 716, 1616, 1722) to request joinder to a conference call associated with said conference call event.

13. The method of claim 12 further comprising setting said added activatable component to request joinder to a conference call associated with said conference call event as a selected component.

14. The method of claim 13 wherein said setting is simultaneous with said adding.

15. The method of any one of claim 10, claim 12, claim 13, or claim 14 wherein said plurality of activatable components comprise an activatable component (1724) to dismiss said reminder window and further comprising ceasing to display said reminder window upon selection of said activatable component to dismiss.

16. A mobile communications device configured to implement the method of any one of claims 1 to 15.

17. A computer readable medium containing computer-executable instructions which, when executing on a processor of a mobile communications device cause said mobile communication device to alter an interface in accordance with the method any one of claims 1 to 15.

## Amended claims

### Amended claims in accordance with Rule 137(2) EPC.

**1.** A computer-implemented method for altering an interface, said method comprising:
displaying, on a mobile device screen, an interface (500, 370, 712, 1610) associated with a calendar application having time-dependent events, said interface comprising:
at least one interface component (516, 700, 720) associated with a time-dependent event;
a hideable menu (512, 702, 714, 1612) comprising at least one activatable component () related to calendar actions;
hiding said menu;
only upon receipt of an indication of selection of said interface component associated with said time-dependent event, displaying, while displaying said interface, said menu;
at a pre-set time relative to said time-dependent event, altering said interface to add an added activatable component (510, 704, 716, 1616) to said menu or to set a pre-determined one of said at least one activatable component (510, 704, 716, 1616) of said menu as a selected component.

**2.** The method of claim 1 wherein said altering said interface adds an added activatable component to said menu and further comprising simultaneously setting said added selectable component as a selected component.

**3.** The method of claim 1 or claim 2 wherein said at least one activatable component is a plurality of activatable components providing a menu (512, 702, 714, 1612) of choices.

**4.** The method of any one of claims 1 to 3 wherein said interface displays a conference call event.

**5.** The method of claim 4 wherein said altering said interface comprises adding an added activatable component (510, 704, 716, 1616) to request joinder to a conference call associated with said conference call event.

**6.** The method of claim 5 further comprising setting said added activatable component to request joinder to a conference call associated with said conference call event as a selected component.

**7.** The method of claim 5 or claim 6 further comprising upon receipt of an indication of activation of said activatable component to join said conference call, locating information associated with said conference call in a database (2116), said information comprising a telephone number for a conference call bridge; and initiating connection with said conference call bridge using said telephone number.

**8.** The method of claim 4 wherein at least one activatable component comprises an activatable component (510, 704, 716, 1616) to request joinder to a conference call associated with said conference call event.

**9.** The method of claim 8 wherein altering said interface comprises setting said activatable component to request joinder to a conference call associated with said conference call event as said selected component.

**10.** The method of claim 4, claim 8 or claim 9 wherein said interface displays a reminder window (1720) for said conference call event, said reminder window being presented a pre-selected time before said conference call event.

**11.** The method of any one of claim 8, claim 9, or claim 10 when dependent upon claim 8 or claim 9 further comprising, upon receipt of an indication of activation of said activatable component to join said conference call, locating in a database (2116) information associated with said conference call, said information including a telephone number for a conference call bridge; and initiating connection with said conference call bridge using said telephone number.

**12.** The method of claim 10 when dependent upon claim 5 wherein said altering said interface comprises adding an added activatable component (510, 704, 716, 1616, 1722) to request joinder to a conference call associated with said conference call event.

**13.** The method of claim 12 further comprising setting said added activatable component to request joinder to a conference call associated with said conference call event as a selected component.

**14.** The method of claim 13 wherein said setting is simultaneous with said adding.

**15.** The method of any one of claim 10, claim 12, claim 13, or claim 14 wherein at least one activatable component comprises an activatable component (1724) to dismiss said reminder window and further comprising ceasing to display said reminder window upon selection of said activatable component to dismiss.

**16.** A mobile communications device configured to implement the method of any one of claims 1 to 15.

**17.** A computer readable medium containing computer-executable instructions which, when executing on a processor of a mobile communications device cause said mobile communication device to alter an interface in accordance with the method any one of claims 1 to 15.
